# EUROPEAN PATENT SPECIFICATION

(11) **EP 4 128 029 B1**
(45) Date of publication and mention of the grant of the patent: **06.05.2026**
(21) Application number: 21723365.9
(22) Date of filing: 23.03.2021
(51) Int. Cl.: G06F 18/214, G06N 3/08, G06T 19/00, G06V 20/64, G06N 3/0464, G06N 3/09

(54) **METHOD AND SYSTEM OF AUGMENTING A VIDEO FOOTAGE OF A SURVEILLANCE SPACE WITH A TARGET THREE-DIMENSIONAL (3D) OBJECT FOR TRAINING AN ARTIFICIAL INTELLIGENCE (AI) MODEL**
VERFAHREN UND SYSTEM ZUR ANREICHERUNG VON VIDEOMATERIAL EINES ÜBERWACHUNGSRAUMES MIT EINEM DREIDIMENSIONALEN (3D) ZIELOBJEKT ZUM TRAINIEREN EINES MODELLS DER KÜNSTLICHEN INTELLIGENZ (AI)
PROCEDE ET SYSTEME D'AUGMENTATION D'UNE SEQUENCE VIDEO D'UN ESPACE DE SURVEILLANCE AVEC UN OBJET CIBLE TRIDIMENSIONNEL (3D) POUR L'ENTRAINEMENT D'UN MODELE D'INTELLIGENCE ARTIFICIELLE (AI)

(30) Priority: 23.03.2020 US 202062993129 P
(43) Date of publication of application: 08.02.2023
(73) Proprietor: Darvis, Inc., San Francisco, CA 94107 (US)
(72) Inventor: NADLER, Ingo, 53498 Bad Breisig (DE); MOHR, Jan-Philipp, 20249 Hamburg (DE)
(74) Representative: Basck Limited
(86) International application number: PCT/IB2021/052393
(87) International publication number: WO 2021/191789

(56) References cited:
- WO-A1-2019/113510
- US-A1- 2019 251 397

## Description

### TECHNICAL FIELD

The present disclosure relates to methods for augmenting a video footage of a surveillance space with a target three-dimensional (3D) object from one or more perspectives for training an artificial intelligence (AI) model. Moreover, the present disclosure also relates to systems for augmenting a video footage of a surveillance space with a target three-dimensional (3D) object from one or more perspectives for training an artificial intelligence (AI) model.

### BACKGROUND

Typically, artificial intelligence (AI) models used in computer vision need training like any other AI model. For object detection, images of target 3D objects that are to be trained, are presented to the AI models along with "labels" that include small data files that describe the position and class of the target 3D objects in an image. Typically, training AI models requires presenting thousands of such labeled images to an AI model. A commonly used technique for acquiring the large enough number of labeled training images includes using video footage containing the desired target 3D objects and employing humans for identifying objects in the images associated with the video footage, drawing a bounding box around the identified objects and selecting an object class. Another known technique for acquiring the large enough number of labeled training images includes using 'game engines' (such as for example, Zumo labs) to create a virtual simulated environment with the target 3D objects in them, then calculating the bounding boxes, rendering a large number of images with appropriate labels.

However, it is challenging to acquire a large enough number of labeled training images. The method of employing humans for identifying objects in images is an extremely long-lasting and expensive process. In the method where a virtual simulated environment is created, the main disadvantage is a very clean look of objects without real world background, which creates a weaker training set used for training, resulting in less accurate object detection.

Therefore, in light of the foregoing discussion, there is a need to overcome the aforementioned drawbacks associated with the existing techniques for providing a method and a system for augmenting a video footage with a target three-dimensional (3D) object from one or more perspectives for training an artificial intelligence (AI) model.

Documents WO 2019/113510 A1 and US 2019/251397 A1 describe methods for producing training data for a machine learning system by incorporating a 3D model of an object into captured images of a scene.

### SUMMARY

The present disclosure seeks to provide a method of augmenting a video footage of a surveillance space with a target three-dimensional (3D) object from one or more perspectives for training an artificial intelligence (AI) model. The present disclosure also seeks to provide a system for augmenting a video footage of a surveillance space with a target 3D object from one or more perspectives for training an AI model. An aim of the present disclosure is to provide a solution that overcomes at least partially the problems encountered in prior art by providing a technique for (semi-) automatically augmenting video footage from actual surveillance cameras with target 3D objects. Use of real video footage that includes 'distractor' objects and a blending possibility as a training set of 3D objects for training the AI models, significantly reduces training time and significantly increases the quality of training.

In one aspect, the present disclosure provides a method of augmenting a video footage of a surveillance space with a target three-dimensional (3D) object from one or more perspectives for training an artificial intelligence (AI) model, the method comprising:
- acquiring the video footage from a target camera in the surveillance space;
- determining a ground plane and one or more screen coordinates of one or more corners of the ground plane in the video footage;
- normalizing the one or more screen coordinates by calculating a homography matrix from the ground plane and determining a relative position of each of one or more objects in the ground plane;
- preparing a model of the target 3D object to be used for training the AI model;
- iteratively generating a random position and a random rotation for the target 3D object in the ground plane for positioning the target 3D object in front of or behind a distractor object from among the one or more objects in the ground plane;
- rendering the model of the target 3D object on the ground plane and composing the rendered 3D object and the ground plane with the acquired video footage to generate a composited image, wherein upon the relative position of the target 3D object on the ground plane being behind the relative position of the distractor object, a mask of the distractor object is used to obscure the target 3D object; and
- calculating coordinates of a bounding box that frames the relative position of the target 3D object in the composited image and saving the composited image along with the coordinates of the bounding box to be used subsequently for training the AI model.

In another aspect, an embodiment of the present disclosure provides a system for augmenting a video footage of a surveillance space with a target three-dimensional (3D) object from one or more perspectives for training an artificial intelligence (AI) model, the system comprising:
- a target camera disposed in the surveillance space and communicatively coupled to a server, wherein the target camera is configured to capture the video footage of the surveillance space and transmit the captured video footage to the server and; and
- the server communicatively coupled to the target camera and comprising:
   - a memory that stores a set of modules; and
   - a processor that executes the set of modules for augmenting a video footage of a surveillance space with a target 3D object from one or more perspectives for training an AI model, the modules comprising:
      - a footage acquisition module for acquiring the video footage from the target camera in the surveillance space;
      - a ground plane module for:
         - determining a ground plane and one or more screen coordinates of the ground plane corners in the video footage; and
         - normalizing the one or more screen coordinates by calculating a homography matrix from the ground plane and determining a relative position of each of one or more objects in the ground plane;
      - a model preparation module for preparing a model of the target 3D object to be used for training the AI model;
      - a 3D object positioning module for iteratively generating a random position and a random rotation for the target 3D object in the ground plane for positioning the target 3D object in front of or behind a distractor object from among the one or more objects in the ground plane;
      - a rendering module for rendering the model of the target 3D object on the ground plane and composing the rendered 3D object and the ground plane with the acquired video footage to generate a composited data, wherein upon the relative position of the target 3D object on the ground plane being behind the relative position of the distractor object, a mask of the distractor object is used to obscure the target 3D object; and
      - a training data module for calculating coordinates of a bounding box that frames the relative position of the target 3D object in the composited image and saving the composited image along with the coordinates of the bounding box to be used subsequently for training the AI model.

Embodiments of the present disclosure substantially eliminate or at least partially address the aforementioned problems in the prior art, and enable a (semi-)automatic augmentation of a video footage from surveillance cameras with training target 3D objects to be used as training videos or images.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 illustrates a schematic illustration of a system for augmenting a video footage of a surveillance space with a target three-dimensional (3D) object from one or more perspectives for training an artificial intelligence (AI) model, in accordance with an embodiment of the present disclosure;
FIG. 2A illustrates a target camera view in a surveillance space, in accordance with an exemplary scenario;
FIG. 3 illustrates screen coordinates of a normalized ground plane generated from the ground plane using a homography matrix, in accordance with an exemplary scenario;
FIG. 4 illustrates a relative position of the object on the normalized ground plane, in accordance with an exemplary scenario;
FIG. 5A illustrates a target camera view of the surveillance space with a masked potentially obscuring object, in accordance with an exemplary scenario;
FIG. 5B illustrates a target 3D object in the target camera view that is rendered solo, in accordance with an exemplary scenario;
FIG. 6A illustrates the target 3D object rendered with shadows on a grey background for easier compositing, in accordance with an exemplary scenario;
FIG. 6B illustrates a distractor object placed behind a masked target 3D object, in accordance with an exemplary scenario;
FIG. 7A illustrates the target 3D object with a bounding box for training, in accordance with an exemplary scenario;
FIG. 7B illustrates the target 3D object placed behind the masked distractor object, the mask is used to obscure the target 3D object, in accordance with an exemplary scenario;
FIG. 8A illustrates a millimeter wave (mmWave) sensor dot reflection of the object obtained as a result of rendering the object, in accordance with an exemplary scenario;
FIG. 8B illustrates a millimeter wave (mmWave) sensor dot reflection of the target 3D object obtained as a result of rendering the target 3D object, in accordance with an exemplary scenario; and
FIGS. 9A-9B illustrate steps of a method for augmenting a video footage of a surveillance space with a target three-dimensional (3D) object from one or more perspectives for training an artificial intelligence (AI) model, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, the present disclosure provides a method of augmenting a video footage of a surveillance space with a target three-dimensional (3D) object from one or more perspectives for training an artificial intelligence (AI) model, the method comprising:
- acquiring the video footage from a target camera in the surveillance space;
- determining a ground plane and one or more screen coordinates of one or more corners of the ground plane in the video footage;
- normalizing the one or more screen coordinates by calculating a homography matrix from the ground plane and determining a relative position of each of one or more objects in the ground plane;
- preparing a model of the target 3D object to be used for training the AI model;
- iteratively generating a random position and a random rotation for the target 3D object in the ground plane for positioning the target 3D object in front of or behind a distractor object from among the one or more objects in the ground plane;
- rendering the model of the target 3D object on the ground plane and composing the rendered 3D object and the ground plane with the acquired video footage to generate a composited image, wherein upon the relative position of the target 3D object on the ground plane being behind the relative position of the distractor object, a mask of the distractor object is used to obscure the target 3D object; and
- calculating coordinates of a bounding box that frames the relative position of the target 3D object in the composited image and saving the composited image along with the coordinates of the bounding box to be used subsequently for training the AI model.

In another aspect, an embodiment of the present disclosure provides a system for augmenting a video footage of a surveillance space with a target three-dimensional (3D) object from one or more perspectives for training an artificial intelligence (AI) model, the system comprising:
- a target camera disposed in the surveillance space and communicatively coupled to a server, wherein the target camera is configured to capture the video footage of the surveillance space and transmit the captured video footage to the server and; and
- the server communicatively coupled to the target camera and comprising:
   - a memory that stores a set of modules; and
   - a processor that executes the set of modules for augmenting a video footage of a surveillance space with a target 3D object from one or more perspectives for training an AI model, the modules comprising:
      - a footage acquisition module for acquiring the video footage from the target camera in the surveillance space;
      - a ground plane module for:
         - determining a ground plane and one or more screen coordinates of the ground plane corners in the video footage; and
         - normalizing the one or more screen coordinates by calculating a homography matrix from the ground plane and determining a relative position of each of one or more objects in the ground plane;
      - a model preparation module for preparing a model of the target 3D object to be used for training the AI model;
      - a 3D object positioning module for iteratively generating a random position and a random rotation for the target 3D object in the ground plane for positioning the target 3D object in front of or behind a distractor object from among the one or more objects in the ground plane;
      - a rendering module for rendering the model of the target 3D object on the ground plane and composing the rendered 3D object and the ground plane with the acquired video footage to generate a composited data, wherein upon the relative position of the target 3D object on the ground plane being behind the relative position of the distractor object, a mask of the distractor object is used to obscure the target 3D object; and
      - a training data module for calculating coordinates of a bounding box that frames the relative position of the target 3D object in the composited image and saving the composited image along with the coordinates of the bounding box to be used subsequently for training the AI model.

The present disclosure provides a method and system for augmenting a video footage of a surveillance space with a target three-dimensional (3D) object from one or more perspectives for training an artificial intelligence (AI) model. In various embodiments, a surveillance video or other sensor footage is augmented and merged with a rendered target 3D object or artificial data generated from it. In a further embodiment, multiple images or data sets from one or more perspectives are combined and used to train the AI model.

The method of the present disclosure significantly reduces training time and significantly increases the quality of training by using real video footage that includes 'distractor' objects and a blending possibility, as a training set of 3D objects for training the AI models. The method of the present invention enables acquiring a large enough number of labeled training images for training the AI models. Additionally, the method of the present disclosure enables augmenting a video footage of a surveillance space with a target three-dimensional (3D) object from one or more perspectives for training without any human intervention for identifying objects and thus is less expensive and faster compared to other known techniques that involve manual identification. Moreover, the method of the present disclosure creates training images with look and feel of the real world, thereby creating a stronger training set when used for training, resulting in more accurate object detection when compared to other known techniques such as, the images created with the real-time game engines.

The method comprises acquiring a video footage from a target camera in a surveillance space. Throughout the present disclosure, the term *"video footage"* refers to a digital content comprising a visual component that is recorded using the target camera, such as for example a surveillance camera. The video footage may be received from a database storing the video footage.

Optionally, the video footage may include a 360-degree video footage covering an entire area seen by a surveillance camera, including for example a video footage of a person walking through a hallway or a corridor. The target camera is communicably coupled to a server.

The method comprises determining a ground plane and one or more screen coordinates of one or more corners of the ground plane in the video footage. The ground plane may be generated by using one or more computer vision algorithms known in the art. On determining the ground plane, a clean background image is generated from comparing several consecutive video frames and composing the background from image areas without moving objects. Subsequent to determining the ground plane, one or more edges of the ground plane is identified. Additionally, a 3D rotation, a scale and/or a translation of the ground plane relative to a known camera position and lens characteristic is determined using a known aspect ratio of the ground plane. In one embodiment a known pattern (e.g. a large checkerboard) is put on the ground plane in the video when the video footage is acquired, so as to determine the 3D rotation, the scale and/or the translation of the ground plane relative to the known camera position, without finding the one or more edges of the ground plane optically. In another embodiment only the aspect ratio of the one or more edges of the ground plane is calculated and is subsequently used for compositing.

Optionally, the one or more corners of the ground plane may be marked manually by humans by clicking on them. If the corner points of the ground plane have been manually marked in the image, then the screen coordinates are determined based on the marking and used for subsequent steps.

The method comprises normalizing the one or more screen coordinates by calculating a homography matrix from the ground plane and determining a relative position of each of one or more objects in the ground plane. Herein, the term "homography" refers to a transformation (a matrix) that maps one or more points in one image to the corresponding points in another image. In the field of computer vision any two images of the same planar surface in space are related by a homography (assuming a pinhole camera model). Once camera rotation and translation have been extracted from an estimated homography matrix, this information may be used for navigation, or to insert models of 3D objects into an image or video, so that they are rendered with the correct perspective and appear to have been part of the original scene.

Optionally, the method further comprises masking one or more objects standing on the ground plane by finding a bounding box around each of the one or more objects, prior to determining the relative position of each object in the ground plane.

In several embodiments, computer vision algorithms are applied to the video footage to find and mask the one or more objects standing on the ground plane. The one or more objects standing on the ground plane are masked by comparing to a clean background image or by running a computer vision algorithm to find the one or more objects and calculating a bounding box around each object. Subsequently, a relative position of each of the one or more objects on the ground plane is calculated by multiplying the homography matrix to the center position of a lower edge of the bounding box associated with the object. The relative position may be in the form of a two-dimensional (2D) coordinate representing the position of the one or more objects on the normalized ground plane. This step is omitted when working with a clean background.

The method comprises preparing a model of the target 3D object to be used for training the AI model. The model of the target 3D object comprises a 3D model and includes correct shaders and surface properties that the AI model is to be trained on. Optionally, if other sensors other than video are used, then the material properties of the 3D model are matched with those of actual surface materials for example, a property of a metal being a strong reflector for millimeter wave (mmWave) radar.

The method comprises iteratively generating a random position and a random rotation for the target 3D object in the ground plane for positioning the target 3D object in front of or behind a distractor object from among the one or more objects in the ground plane. In an embodiment, the random position and the random rotation is iteratively generated for positioning the target 3D object in front of or behind the distractor object without colliding with the relative position of the distractor object.

If the target 3D object collides with the position of a distractor object or exceeds the ground plane (e.g. half of the bed reaches into a wall), a new random position/rotation is generated until the target 3D object is cleanly placed on the ground plane in front of or behind any distractor objects. If the relative position of the target 3D object on the ground plane is behind a distractor object, a mask of the distractor object is used to obscure the target 3D object.

Optionally, upon the video footage comprising a 360-degree video footage, prior to rendering the model of the target 3D object, the target 3D object is illuminated based on global illumination by:
- determining a random image from the video footage to be used as texture on a large sphere based on the randomized position of the target 3D object relative to the ground plane by matching the position of the target 3D object and the position of recording the video footage; and
- placing the random image from the video footage on the large sphere to provide a realistic lighting to the target 3D object.

Optionally, images from the 360-degree video footage may be acquired from a position that corresponds to the position of the target object. In this embodiment, the video footage can be acquired by moving a 360-degree camera across the surveillance area in a predetermined pattern, so the camera position can be calculated from the image timestamp.

The random image provides an environment map for reflections. In one embodiment the randomized position of the target 3D object relative to the ground plane may be used to determine the image from the 360-degree video to be used as texture on the large sphere, thus approximating and matching the position of the target 3D object and the position where the 360-degree video was recorded.

The method comprises rendering the model of the target 3D object on the ground plane and composing the rendered target 3D object and the ground plane with the acquired video footage to generate a composited image. Upon the relative position of the target 3D object on the ground plane being behind the relative position of the distractor object, a mask of the distractor object is used to obscure the target 3D object.

The target 3D object standing on an invisible ground plane is rendered in either a 3D rendering application such as for example, a 308 Max, Blender, Maya, Cinema40 and the like or a real-time 'gaming engine' including for example, such as Unity30, Unreal, and the like. Optionally, a contact shadow is rendered onto the invisible ground plane. Optionally, shadows cast from light sources in the encompassing 360-degree sphere may be rendered onto the ground plane as well.

The method comprises-calculating coordinates of a bounding box that frames the relative position of the target 3D object in the composited image and saving the composited image along with the coordinates of the bounding box to be used subsequently for training the AI model.

Optionally, calculating the coordinates of the bounding box comprises enclosing the target 3D object in an invisible 3D cuboid and calculating the coordinates of one or more camera facing corners of the invisible 3D cuboid in the surveillance space.

Optionally, for other types of sensor data, such as for example, mmWave radar or light detection and ranging (LIDAR), the method comprises merging at least one of: a plurality of static reflections or a plurality of time sequential reflections from an environment scene and one or more distractor objects with a plurality of simulated reflections generated by a simulated surface material property of the target 3D object and generating a bounding cube to be used for training the AI model (for example, in the case of point cloud sensors).

Optionally, identifying the at least one audio-producing object represented in the given frame of the video comprises:
- employing at least one image processing algorithm for identifying a plurality of objects represented in the given frame; and
- employing at least one neural network to identify at least one audio-producing object, from amongst the plurality of objects.

The present disclosure also relates to the system as described above. Various embodiments and variants disclosed above apply mutatis mutandis to the system.

The system of the present disclosure significantly reduces training time and significantly increases the quality of training by using real video footage that includes 'distractor' objects and blending possibility, as a training set of 3D objects for training the AI models. The system of the present disclosure enables acquiring a large enough number of labeled training images for training the AI models. Additionally, the system of the present disclosure enables augmenting a video footage of a surveillance space with a target three-dimensional (3D) object from one or more perspectives for training without any human intervention for identifying objects and thus is less expensive and faster compared to other known techniques that involve manual identification. Moreover, the system of the present disclosure creates training images with look and feel of the real world, thereby creating a stronger training set when used for training, resulting in more accurate object detection when compared to other known techniques such as, the images created with the real-time game engines.

The system comprises a server. Herein, the term *"server"* refers to a structure and/or module that includes programmable and/or non-programmable components configured to store, process and/or share information. Specifically, the server includes any arrangement of physical or virtual computational entities capable of enhancing information to perform various computational tasks. Furthermore, it should be appreciated that the server may be a single hardware server and/or plurality of hardware servers operating in a parallel or distributed architecture. In an example, the server may include components such as memory, at least one processor, a network adapter and the like, to store, process and/or share information with other entities, such as a broadcast network or a database for receiving the video footage.

Optionally, the system further comprises an edge determination module configured to determine one or more edges of the ground plane and calculate a 3D rotation, scale translation relative to a camera position, and a lens characteristic using an aspect ratio of the ground plane, prior to normalizing the one or more screen coordinates.

Optionally, the 3D object positioning module is further configured to mask one or more objects standing on the ground plane by finding a bounding box around each of the one or more objects, prior to determining the relative position of each object in the ground plane.

Optionally, the 3D object positioning module is further configured to multiply the homography matrix to a center position of a lower edge of the bounding box of an object from among the one or more object, and generate a two-dimensional (2D) - coordinate representing the relative position of the object on the normalized ground plane.

Optionally, the training data module is further configured to enclose the target 3D object in an invisible 3D cuboid and calculate the coordinates of one or more camera facing corners of the invisible 3D cuboid in the surveillance space.

### DETAILED DESCRIPTION OF THE DRAWINGS

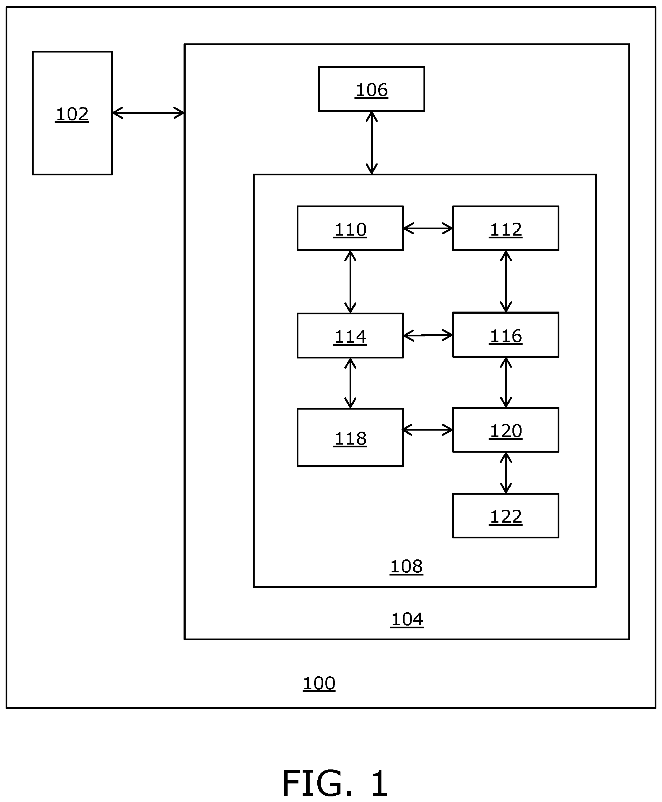

Referring to FIGs. 1 to 9B, FIG. 1 depicts a schematic illustration of a system 100 for augmenting a video footage of a surveillance space with a target three-dimensional (3D) object from one or more perspectives for training an artificial intelligence (AI) model, in accordance with an embodiment of the present disclosure. The system **100** comprises a target camera **102** and a server **104** communicably coupled to the target camera **102,** for example, via a communication network (not shown). The target camera **102** is disposed in a surveillance space and is configured to capture the video footage of the surveillance space and transmit the captured video footage to the server **104.** The server **104** comprises a memory **106** that stores a set of modules and a processor **108** that executes the set of modules for augmenting a video footage of a surveillance space with a target 3D object from one or more perspectives for training an AI model. The set of modules comprises a footage acquisition module **110,** a ground plane module **112,** a model preparation module **114,** a 3D object positioning module **116,** a rendering module **118,** and a training data module **120.** The footage acquisition module **110** is configured to acquire the video footage from the target camera in the surveillance space. The ground plane module **112** is configured to determine a ground plane and one or more screen coordinates of the ground plane corners in the video footage and normalize the one or more screen coordinates by calculating a homography matrix from the ground plane and determining a relative position of each of one or more objects in the ground plane.

The model preparation module **114** is configured to prepare a model of the target 3D object to be used for training the AI model. The 3D object positioning module **116** is configured for iteratively generating a random position and a random rotation for the target 3D object in the ground plane for positioning the target 3D object in front of or behind a distractor object from among the one or more objects in the ground plane. The rendering module **118** is configured for rendering the model of the target 3D object on the ground plane and composing the rendered 3D object and the ground plane with the acquired video footage to generate a composited data, wherein upon the relative position of the target 3D object on the ground plane being behind the relative position of the distractor object, a mask of the distractor object is used to obscure the target 3D object. The training data module **120** is configured for calculating coordinates of a bounding box that frames the relative position of the target 3D object in the composited image and saving the composited image along with the coordinates of the bounding box to be used subsequently for training the AI model.

Optionally the system **100** also includes an edge determination module **122** configured to determine one or more edges of the ground plane and calculate a 3D rotation, scale translation relative to a camera position, and a lens characteristic using an aspect ratio of the ground plane, prior to normalizing the one or more screen coordinates.

Optionally the 3D object positioning module **116** is further configured to mask one or more objects standing on the ground plane by finding a bounding box around each of the one or more objects, prior to determining the relative position of each object in the ground plane.

Optionally the 3D object positioning module **116** is further configured to multiply the homography matrix to a center position of a lower edge of the bounding box of an object from among the one or more objects and generate a two-dimensional (2D) coordinate representing the relative position of the object on the normalized ground plane.

Optionally the training data module **120** is further configured to enclose the target 3D object in an invisible 3D cuboid and calculate the coordinates of one or more camera facing corners of the invisible 3D cuboid in the surveillance space.

It may be understood by a person skilled in the art that the FIG. 1 is merely an example for the sake of clarity, which should not unduly limit the scope of the claims herein. The person skilled in the art will recognize many variations, alternatives, and modifications of embodiments of the present disclosure.

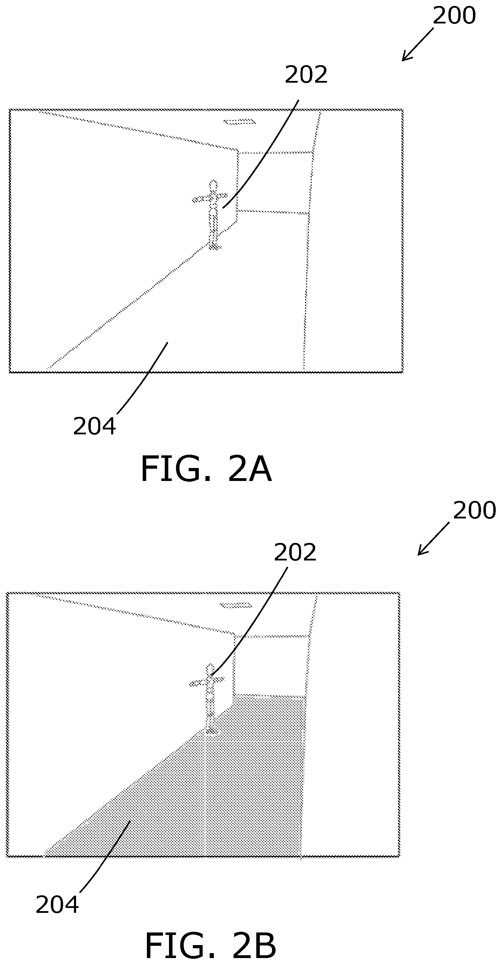

Referring to FIGs 2A to 8B, FIG. 2A illustrates a target camera view **200** in a surveillance space, in accordance with an exemplary scenario. The target camera view **200** depicts an object **202** (e.g., a person) standing on a ground plane **204.** FIG. 2B illustrates the target camera view **200** of FIG. 2A with a ground plane **204** marked (in grey) therein. The ground plane **204** may be generated by using one or more computer vision algorithms known in the art.

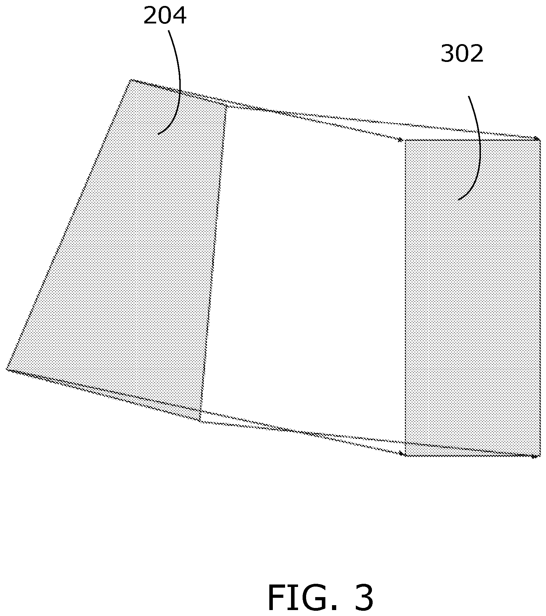

FIG. 3 illustrates screen coordinates of a normalized ground plane **302** generated from the ground plane **204** using a homography matrix, in accordance with an exemplary scenario. The ground plane **204** is normalized to generate the normalized ground plane **302,** by normalizing the one or more screen coordinates of the ground plane **204** by calculating a homography matrix from the ground plane **204** and determining a relative position of each of one or more objects in the ground plane **204.**

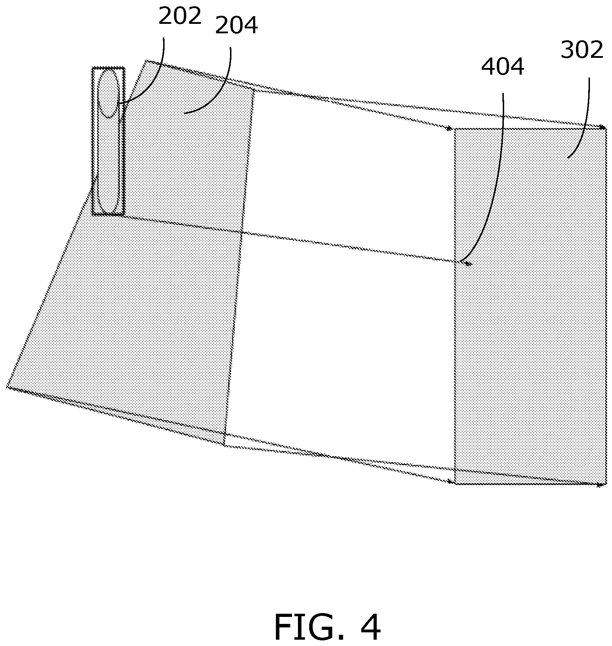

FIG. 4 illustrates a relative position **404** of the object **202** on the normalized ground plane **302,** in accordance with an exemplary scenario. The relative position **404** of the object **202** is calculated by multiplying the homography matrix to the center position of a lower edge of a bounding box associated with the object **202.** The relative position **404** may be in the form of 2D coordinate representing a position of the object **202** on the normalized ground plane **302.**

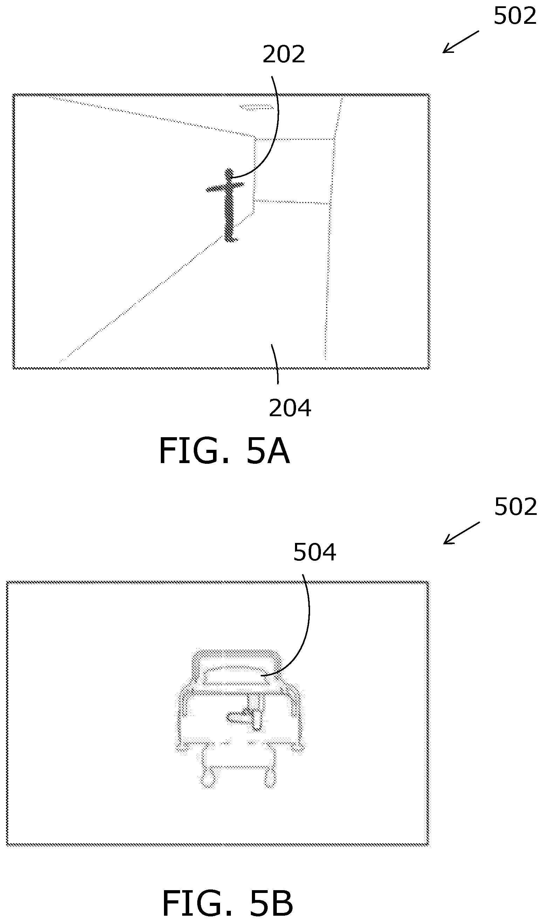

FIG. 5A illustrates a target camera view **502** of the surveillance space with a masked potentially obscuring object **202,** in accordance with an exemplary scenario.

FIG. 5B illustrates a target 3D object (such as for example, a cot) **504** in the target camera view **502** that is rendered solo, in accordance with an exemplary scenario.

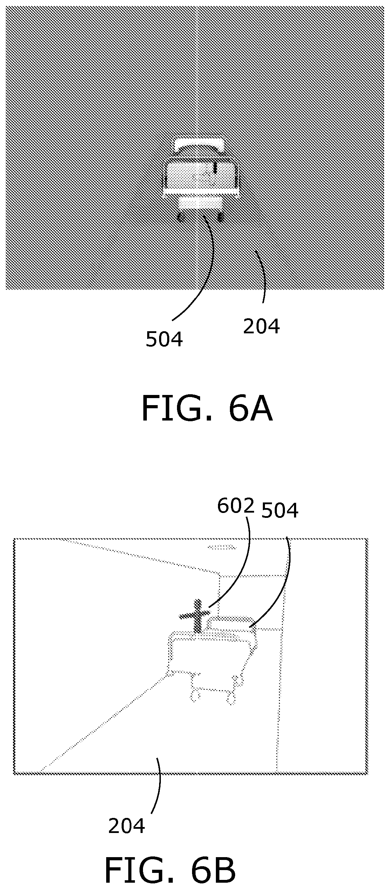

FIG. 6A illustrates the target 3D object **504** rendered with shadows on a grey background for easier compositing, in accordance with an exemplary scenario. The target 3D object **504** may be rendered on the ground plane **204** and the rendered target 3D object **504** and the ground plane **204** is composed with the video footage to generate a composited image. Upon the relative position of the target 3D object **504** on the ground plane **204** being behind the relative position of a distractor object, a mask of the distractor object is used to obscure the target 3D object as illustrated in FIG. 6B.

FIG. 6B illustrates a distractor object **602** placed behind a masked target 3D object **504,** in accordance with an exemplary scenario. The mask of the distractor object **602** is used to obscure the target 3D object **504.**

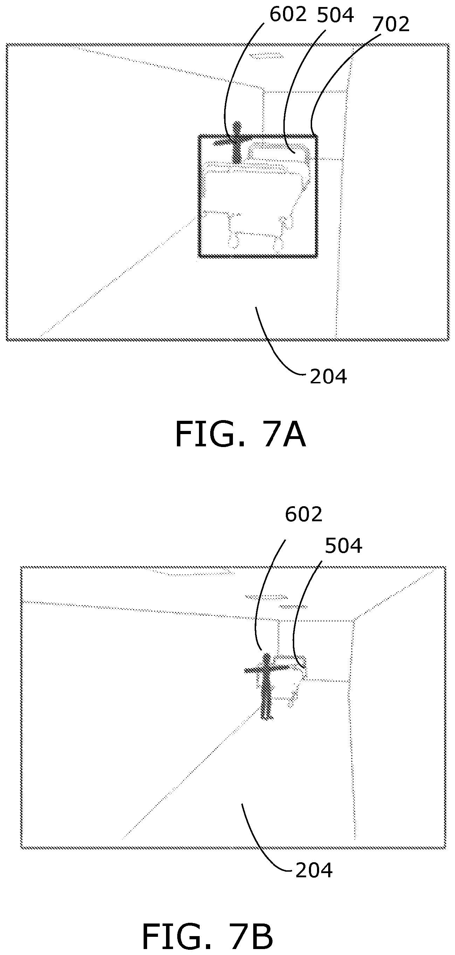

FIG. 7A illustrates the target 3D object **504** with a bounding box **702** for training, in accordance with an exemplary scenario. The coordinates of the bounding box **702** that frames the relative position of the target 3D object **504** in a composited image is calculated and the composited image is saved along with the coordinates of the bounding box **702** to be used subsequently for training the AI model.

FIG. 7B illustrates the target 3D object **504** placed behind the masked distractor object **602,** the mask is used to obscure the target 3D object **504,** in accordance with an exemplary scenario. If the relative position **404** of the target 3D object **504** on the ground plane **204** is behind a distractor object **602,** a mask of the distractor object **602** is used to obscure the target 3D object **504.**

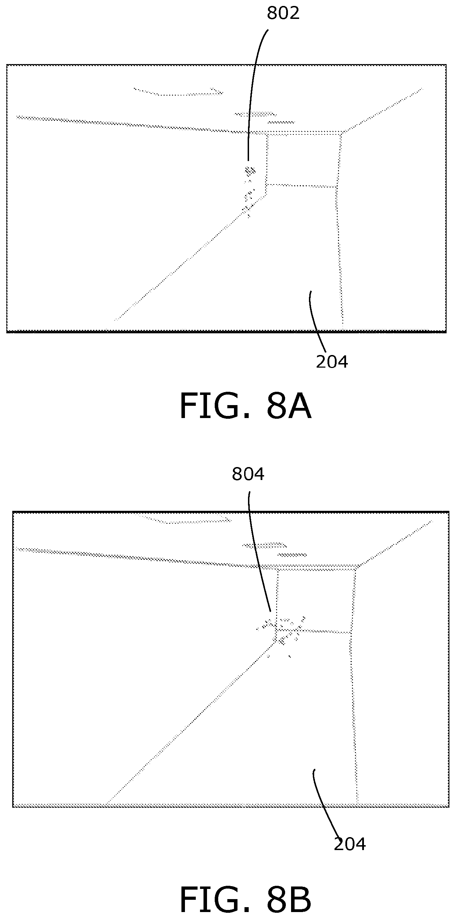

FIG. 8A illustrates a millimeter wave (mmWave) sensor dot reflection **802** of the object **202** obtained as a result of rendering the object **202,** in accordance with an exemplary scenario.

FIG. 8B illustrates a millimeter wave (mmWave) sensor dot reflection **804** of the target 3D object **504** obtained as a result of rendering the target 3D object **504,** in accordance with an exemplary scenario.

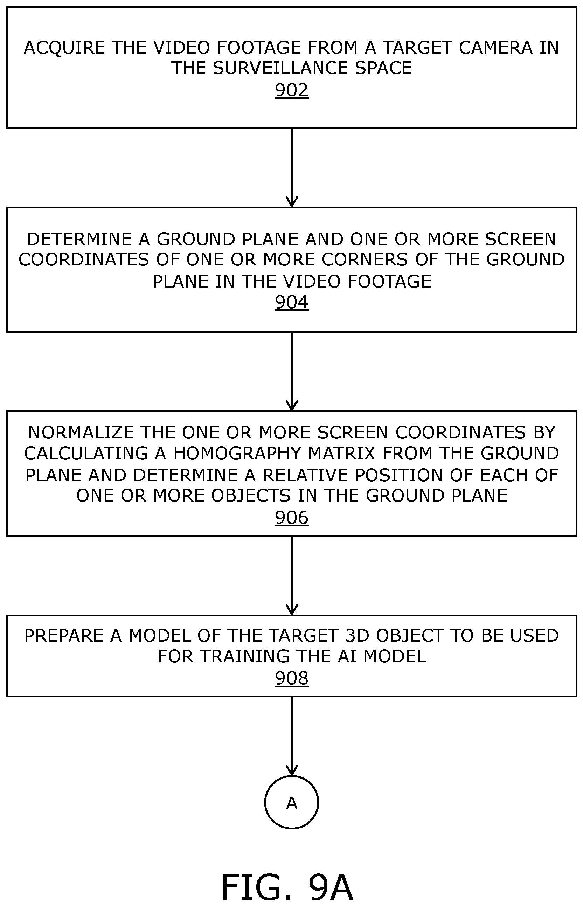

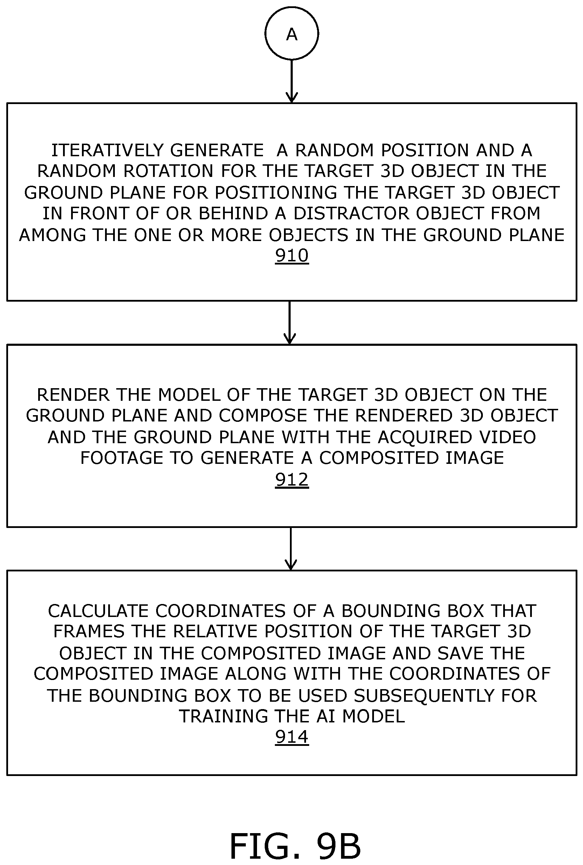

FIGS. 9A-9B illustrates steps of a method for augmenting a video footage of a surveillance space with a target three-dimensional (3D) object from one or more perspectives for training an artificial intelligence (AI) model, in accordance with an embodiment of the present disclosure. At step **902,** the audio-visual content is received, wherein the audio-visual content comprises a video and an audio. At step **904,** a ground plane and one or more screen coordinates of one or more corners of the ground plane are determined in the video footage. At step **906,** the one or more screen coordinates are normalized by calculating a homography matrix from the ground plane and a relative position of each of one or more objects in the ground plane is determined. At step **908,** a model of the target 3D object is prepared to be used for training the AI model. At step **910,** a random position and a random rotation for the target 3D object in the ground plane are iteratively generated for positioning the target 3D object in front of or behind a distractor object from among the one or more objects in the ground plane. At step **912,** the model of the target 3D object is rendered on the ground plane and the rendered 3D object and the ground plane is composed with the acquired video footage to generate a composited image, where upon the relative position of the target 3D object on the ground plane being behind the relative position of the distractor object, a mask of the distractor object is used to obscure the target 3D object. At step **914,** coordinates of a bounding box that frames the relative position of the target 3D object are calculated in the composited image and saving the composited image along with the coordinates of the bounding box to be used subsequently for training the AI model.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method of augmenting a video footage of a surveillance space with a target three-dimensional (3D) object from one or more perspectives for training an artificial intelligence (AI) model, the method comprising:
- acquiring (902) the video footage from a target camera in the surveillance space;
- determining (904) a ground plane and one or more screen coordinates of one or more corners of the ground plane in the video footage;
- normalizing (906) the one or more screen coordinates by calculating a homography matrix from the ground plane and determining a relative position of each of one or more objects in the ground plane;
- preparing (908) a model of the target 3D object to be used for training the AI model;
- iteratively generating (910) a random position and a random rotation for the target 3D object in the ground plane for positioning the target 3D object in front of or behind a distractor object from among the one or more objects in the ground plane;
- rendering (912) the model of the target 3D object on the ground plane and composing the rendered 3D object and the ground plane with the acquired video footage to generate a composited image, wherein upon the relative position of the target 3D object on the ground plane being behind the relative position of the distractor object, a mask of the distractor object is used to obscure the target 3D object; and
- calculating (914) coordinates of a bounding box that frames the relative position of the target 3D object in the composited image and saving the composited image along with the coordinates of the bounding box to be used subsequently for training the AI model.

2. A method of claim 1, wherein further comprising determining one or more edges of the ground plane and calculating a 3D rotation, scale translation relative to a camera position and a lens characteristic using an aspect ratio of the ground plane, prior to normalizing the one or more screen coordinates.

3. A method of claim 1 or 2, further comprising masking one or more objects standing on the ground plane by finding a bounding box around each of the one or more objects, prior to determining the relative position of each object in the ground plane.

4. A method of any of the preceding claims, wherein the relative position of each of the one or more objects is determined by:
- multiplying the homography matrix to a center position of a lower edge of the bounding box of an object from among the one or more objects; and
- generating a two-dimensional (2D) - coordinate representing the relative position of the object on the normalized ground plane.

5. A method of any of the preceding claims, wherein upon the video footage comprising a 360-degree video footage, prior to rendering the model of the target 3D object, the target 3D object is illuminated based on global illumination by:
- determining a random image from the video footage to be used as texture on a large sphere based on the randomized position of the target 3D object relative to the ground plane by matching the position of the target 3D object and the position of recording the video footage; and
- placing the random image from the video footage on the large sphere to provide a realistic lighting to the target 3D object.

6. A method of any of the preceding claims, wherein the ground plane is determined by applying at least one of: a computer vision algorithm or manual marking by a human.

7. A method of any of the preceding claims, further comprising merging at least one of: a plurality of static reflections or a plurality of time sequential reflections from an environment scene and one or more distractor objects with a plurality of simulated reflections generated by a simulated surface material property of the target 3D object and generating a bounding cube to be used for training the AI model.

8. A method any of the preceding claims, wherein the video footage comprises a 360-degree video footage.

9. A method of any of the preceding claims, wherein calculating the coordinates of the bounding box comprises:
- enclosing the target 3D object in an invisible 3D cuboid; and
- calculating the coordinates of one or more camera facing corners of the invisible 3D cuboid in the surveillance space.

10. A system (100) for augmenting a video footage of a surveillance space with a target three-dimensional (3D) object from one or more perspectives for training an artificial intelligence (AI) model, the system comprising:
- a target camera (102) disposed in the surveillance space and communicatively coupled to a server (104), wherein the target camera is configured to capture the video footage of the surveillance space and transmit the captured video footage to the server and; and
- the server (104) communicatively coupled to the target camera and comprising:
- a memory (106) that stores a set of modules; and
- a processor (108) that executes the set of modules for augmenting a video footage of a surveillance space with a target 3D object from one or more perspectives for training an AI model, the modules comprising:
- a footage acquisition module (110) for acquiring the video footage from the target camera in the surveillance space;
- a ground plane module (112) for:
- determining a ground plane and one or more screen coordinates of the ground plane corners in the video footage; and
- normalizing the one or more screen coordinates by calculating a homography matrix from the ground plane and determining a relative position of each of one or more objects in the ground plane;
- a model preparation module (114) for preparing a model of the target 3D object to be used for training the AI model;
- a 3D object positioning module (116) for iteratively generating a random position and a random rotation for the target 3D object in the ground plane for positioning the target 3D object in front of or behind a distractor object from among the one or more objects in the ground plane;
- a rendering module (118) for rendering the model of the target 3D object on the ground plane and composing the rendered 3D object and the ground plane with the acquired video footage to generate a composited data, wherein upon the relative position of the target 3D object on the ground plane being behind the relative position of the distractor object, a mask of the distractor object is used to obscure the target 3D object; and
- a training data module (120) for calculating coordinates of a bounding box that frames the relative position of the target 3D object in the composited image and saving the composited image along with the coordinates of the bounding box to be used subsequently for training the AI model.

11. A system of claim 10, further comprising an edge determination module (122) configured to determine one or more edges of the ground plane and calculate a 3D rotation, scale translation relative to a camera position, and a lens characteristic using an aspect ratio of the ground plane, prior to normalizing the one or more screen coordinates.

12. A system of claim 10 or 11, wherein the 3D object positioning module (116) is further configured to mask one or more objects standing on the ground plane by finding a bounding box around each of the one or more objects, prior to determining the relative position of each object in the ground plane.

13. A system of any of the claims 10 to 12, wherein 3D object positioning module (116) is further configured to:
- multiply the homography matrix to a center position of a lower edge of the bounding box of an object from among the one or more objects; and
- generate a two-dimensional (2D) - coordinate representing the relative position of the object on the normalized ground plane.

14. A system of any of the claims 10 to 13, wherein the training data module (120) is further configured to:
- enclose the target 3D object in an invisible 3D cuboid; and
- calculate the coordinates of one or more camera facing corners of the invisible 3D cuboid in the surveillance space.

## Patentansprüche

1. Verfahren zum Erweitern von Videobildern eines Überwachungsraums um ein dreidimensionales (3D) Zielobjekt aus einer oder mehreren Perspektiven zum Trainieren eines Modells künstlicher Intelligenz (KI), wobei das Verfahren Folgendes umfasst:
- Erfassen (902) der Videobilder ausgehend von einer Zielkamera in dem Überwachungsraum;
- Bestimmen (904) einer Grundebene und einer oder mehrerer Bildschirmkoordinaten einer oder mehrerer Ecken der Grundebene in den Videobildern;
- Normalisieren (906) der einen oder der mehreren Bildschirmkoordinaten durch Berechnen einer Homographiematrix anhand der Grundebene und Bestimmen einer relativen Position eines jeden von einem oder mehreren Objekten in der Grundebene;
- Vorbereiten (908) eines Modells des 3D-Zielobjekts, das zum Trainieren des KI-Modells verwendet werden soll;
- iteratives Erzeugen (910) einer zufälligen Position und einer zufälligen Drehung für das 3D-Zielobjekt in der Grundebene zum Positionieren des 3D-Zielobjekts vor oder hinter einem Distraktorobjekt aus dem einen oder den mehreren Objekten in der Grundebene;
- Rendern (912) des Modells des 3D-Zielobjekts auf der Grundebene und Zusammensetzen des gerenderten 3D-Objekts und der Grundebene mit den erfassten Videobildern, um ein zusammengesetztes Bild zu erzeugen, wobei, wenn die relative Position des 3D-Zielobjekts auf der Grundebene hinter der relativen Position des Distraktorobjekts liegt, eine Maske des Distraktorobjekts verwendet wird, um das 3D-Zielobjekt zu verdecken; und
- Berechnen (914) von Koordinaten eines Begrenzungsrahmens, der die relative Position des 3D-Zielobjekts in dem zusammengesetzten Bild umrahmt, und Speichern des zusammengesetzten Bilds zusammen mit den Koordinaten des Begrenzungsrahmens zur anschließenden Verwendung zum Trainieren des KI-Modells.

2. Verfahren nach Anspruch 1, das, vor dem Normalisieren der einen oder der mehreren Bildschirmkoordinaten, ferner ein Bestimmen einer oder mehrerer Kanten der Grundebene und ein Berechnen einer 3D-Drehung, einer Skalierungsverschiebung relativ zu einer Kameraposition und einer Linseneigenschaft unter Verwendung eines Seitenverhältnisses der Grundebene umfasst.

3. Verfahren nach Anspruch 1 oder 2, das, vor dem Bestimmen der relativen Position jedes Objekts in der Grundebene, ferner ein Maskieren eines oder mehrerer Objekte, die auf der Grundebene stehen, durch Finden eines Begrenzungsrahmens um jedes von dem einen oder den mehreren Objekten umfasst.

4. Verfahren nach einem der vorhergehenden Ansprüche, wobei die relative Position von jedem des einen oder der mehreren Objekte bestimmt wird durch:
- Multiplizieren der Homographiematrix mit einer Mittenposition einer unteren Kante des Begrenzungsrahmens eines Objekts aus dem einen oder den mehreren Objekten; und
- Erzeugen einer zweidimensionalen (2D) Koordinate, die die relative Position des Objekts auf der normalisierten Grundebene darstellt.

5. Verfahren nach einem der vorhergehenden Ansprüche, wobei, wenn die Videobilder 360-Grad-Videobilder umfassen, das 3D-Zielobjekt, vor dem Rendern des Modells des 3D-Zielobjekts, basierend auf globaler Beleuchtung beleuchtet wird durch:
- Bestimmen eines zufälligen Bilds aus den Videobildern, das als Textur auf einer großen Kugel verwendet werden soll, basierend auf der randomisierten Position des 3D-Zielobjekts relativ zu der Grundebene durch Abgleichen der Position des 3D-Zielobjekts und der Position der Aufnahme der Videobilder; und
- Platzieren des zufälligen Bilds aus den Videobildern auf der großen Kugel, um eine realistische Beleuchtung für das 3D-Zielobjekt bereitzustellen.

6. Verfahren nach einem der vorhergehenden Ansprüche, wobei die Grundebene durch Anwenden von mindestens einem von einem Computer-Vision-Algorithmus oder einer manuellen Markierung durch einen Menschen bestimmt wird.

7. Verfahren nach einem der vorhergehenden Ansprüche, das ferner ein Zusammenführen mindestens eines von einer Vielzahl von statischen Reflexionen oder einer Vielzahl von zeitlich aufeinanderfolgenden Reflexionen aus einer Umgebungsszene und eines oder mehrerer Distraktorobjekte mit einer Vielzahl von simulierten Reflexionen, die durch eine simulierte Oberflächenmaterialeigenschaft des 3D-Zielobjekts erzeugt werden, und ein Erzeugen eines Begrenzungswürfels, der zum Trainieren des KI-Modells verwendet werden soll, umfasst.

8. Verfahren nach einem der vorhergehenden Ansprüche, wobei die Videobilder 360-Grad-Videobilder umfassen.

9. Verfahren nach einem der vorhergehenden Ansprüche, wobei das Berechnen der Koordinaten des Begrenzungsrahmens Folgendes umfasst:
- Einschließen des 3D-Zielobjekts in einen unsichtbaren 3D-Quader; und
- Berechnen der Koordinaten einer oder mehrerer der Kamera zugewandter Ecken des unsichtbaren 3D-Quaders in dem Überwachungsraum.

10. System (100) zum Erweitern von Videobildern eines Überwachungsraums um ein dreidimensionales (3D) Zielobjekt aus einer oder mehreren Perspektiven zum Trainieren eines Modells künstlicher Intelligenz (KI), wobei das System Folgendes umfasst:
- eine Zielkamera (102), die in dem Überwachungsraum angeordnet ist und kommunikativ mit einem Server (104) gekoppelt ist, wobei die Zielkamera konfiguriert ist, die Videobilder des Überwachungsraums aufzunehmen und die aufgenommenen Videobilder an den Server zu übertragen; und
- den Server (104), der kommunikativ mit der Zielkamera gekoppelt ist und Folgendes umfasst:
- einen Speicher (106), der einen Satz von Modulen speichert; und
- einen Prozessor (108), der den Satz von Modulen ausführt, um Videobilder eines Überwachungsraums um ein 3D-Zielobjekt aus einer oder mehreren Perspektiven zum Trainieren eines KI-Modells zu erweitern, wobei die Module Folgendes umfassen:
- ein Bilderfassungsmodul (110) zum Erfassen der Videobilder von der Zielkamera in dem Überwachungsraum;
- ein Grundebenenmodul (112) zum:
- Bestimmen einer Grundebene und einer oder mehrerer Bildschirmkoordinaten der Grundebenenecken in den Videobildern; und
- Normalisieren der einen oder der mehreren Bildschirmkoordinaten durch Berechnen einer Homographiematrix anhand der Grundebene und Bestimmen einer relativen Position eines jeden von einem oder mehreren Objekten in der Grundebene;
- ein Modellvorbereitungsmodul (114) zum Vorbereiten eines Modells des 3D-Zielobjekts, das zum Trainieren des KI-Modells verwendet werden soll;
- ein 3D-Objekt-Positionierungsmodul (116) zum iterativen Erzeugen einer zufälligen Position und einer zufälligen Drehung für das 3D-Zielobjekt in der Grundebene zum Positionieren des 3D-Zielobjekts vor oder hinter einem Distraktorobjekt aus dem einen oder den mehreren Objekten in der Grundebene;
- ein Rendermodul (118) zum Rendern des Modells des 3D-Zielobjekts auf der Grundebene und Zusammensetzen des gerenderten 3D-Objekts und der Grundebene mit den erfassten Videobildern, um zusammengesetzte Daten zu erzeugen, wobei, wenn die relative Position des 3D-Zielobjekts auf der Grundebene hinter der relativen Position des Distraktorobjekts liegt, eine Maske des Distraktorobjekts verwendet wird, um das 3D-Zielobjekt zu verdecken; und
- ein Trainingsdatenmodul (120) zum Berechnen von Koordinaten eines Begrenzungsrahmens, der die relative Position des 3D-Zielobjekts in dem zusammengesetzten Bild umrahmt, und Speichern des zusammengesetzten Bilds zusammen mit den Koordinaten des Begrenzungsrahmens zur anschließenden Verwendung zum Trainieren des KI-Modells.

11. System nach Anspruch 10, das ferner ein Kantenbestimmungsmodul (122) umfasst, das konfiguriert ist, vor dem Normalisieren der einen oder der mehreren Bildschirmkoordinaten, eine oder mehrere Kanten der Grundebene zu bestimmen und eine 3D-Drehung, eine Skalierungsverschiebung relativ zu einer Kameraposition und eine Linseneigenschaft unter Verwendung eines Seitenverhältnisses der Grundebene zu berechnen.

12. System nach Anspruch 10 oder 11, wobei das 3D-Objekt-Positionierungsmodul (116), vor dem Bestimmen der relativen Position jedes Objekts in der Grundebene, ferner konfiguriert ist, eines oder mehrere Objekte, die auf der Grundebene stehen, durch Finden eines Begrenzungsrahmens um jedes von dem einen oder den mehreren Objekten zu maskieren.

13. System nach einem der Ansprüche 10 bis 12, wobei das 3D-Objekt-Positionierungsmodul (116) ferner konfiguriert ist zum:
- Multiplizieren der Homographiematrix mit einer Mittenposition einer unteren Kante des Begrenzungsrahmens eines Objekts aus dem einen oder den mehreren Objekten; und
- Erzeugen einer zweidimensionalen (2D) Koordinate, die die relative Position des Objekts auf der normalisierten Grundebene darstellt.

14. System nach einem der Ansprüche 10 bis 13, wobei das Trainingsdatenmodul (120) ferner konfiguriert ist zum:
- Einschließen des 3D-Zielobjekts in einen unsichtbaren 3D-Quader; und
- Berechnen der Koordinaten einer oder mehrerer der Kamera zugewandter Ecken des unsichtbaren 3D-Quaders in dem Überwachungsraum.

## Revendications

1. Procédé d'augmentation d'une séquence vidéo d'un espace de surveillance avec un objet tridimensionnel cible (3D) à partir d'une ou plusieurs perspectives pour l'apprentissage d'un modèle d'intelligence artificielle (IA), le procédé comprenant :
- l'acquisition (902) de la séquence vidéo à partir d'une caméra cible dans l'espace de surveillance ;
- la détermination (904) d'un plan de sol et d'une ou plusieurs coordonnées d'écran d'un ou plusieurs coins du plan de sol dans la séquence vidéo ;
- la normalisation (906) des une ou plusieurs coordonnées d'écran en calculant une matrice d'homographie à partir du plan de sol et la détermination d'une position relative de chacun d'un ou plusieurs objets dans le plan de sol ;
- la préparation (908) d'un modèle de l'objet 3D cible à utiliser pour l'apprentissage du modèle d'IA ;
- la génération de manière itérative (910) une position aléatoire et une rotation aléatoire pour l'objet 3D cible dans le plan de sol pour positionner l'objet 3D cible devant ou derrière un objet distracteur parmi le ou les objets dans le plan de sol ;
- le rendu (912) du modèle de l'objet 3D cible sur le plan de sol et la composition de l'objet 3D rendu et du plan de sol avec la séquence vidéo acquise pour générer une image composite, dans lequel, lorsque la position relative de l'objet 3D cible sur le plan de sol est derrière la position relative de l'objet distracteur, un masque de l'objet distracteur est utilisé pour obscurcir l'objet 3D cible ; et
- le calcul (914) des coordonnées d'un cadre de délimitation qui cadre la position relative de l'objet 3D cible dans l'image composite et la sauvegarde de l'image composite avec les coordonnées du cadre de délimitation à utiliser ultérieurement pour l'apprentissage du modèle d'IA.

2. Procédé selon la revendication 1, comprenant en outre la détermination d'un ou plusieurs bords du plan de sol et le calcul d'une rotation 3D, d'une translation d'échelle par rapport à une position de caméra et d'une caractéristique de lentille en utilisant un rapport d'aspect du plan de sol, avant la normalisation des une ou plusieurs coordonnées d'écran.

3. Procédé selon la revendication 1 ou 2, comprenant en outre le masquage d'un ou plusieurs objets se trouvant sur le plan de sol en trouvant un cadre de délimitation autour de chacun des un ou plusieurs objets, avant de déterminer la position relative de chaque objet dans le plan de sol.

4. Procédé selon l'une quelconque des revendications précédentes, dans lequel la position relative de chacun des un ou plusieurs objets est déterminée par :
- la multiplication de la matrice d'homographie à une position centrale d'un bord inférieur de la boîte de délimitation d'un objet parmi le ou les objets ; et
- la génération d'une coordonnée bidimensionnelle (2D) représentant la position relative de l'objet sur le plan de sol normalisé.

5. Procédé selon l'une quelconque des revendications précédentes, dans lequel, lors de la séquence vidéo comprenant une séquence vidéo à 360 degrés, avant le rendu du modèle de l'objet 3D cible, l'objet 3D cible est éclairé sur la base d'un éclairage global par :
- la détermination d'une image aléatoire à partir de la séquence vidéo à utiliser comme texture sur une grande sphère sur la base de la position aléatoire de l'objet 3D cible par rapport au plan de sol en faisant correspondre la position de l'objet 3D cible et la position d'enregistrement de la séquence vidéo ; et
- le placement de l'image aléatoire de la séquence vidéo sur la grande sphère pour fournir un éclairage réaliste à l'objet 3D cible.

6. Procédé selon l'une quelconque des revendications précédentes, dans lequel le plan de sol est déterminé en appliquant l'au moins un parmi : un algorithme de vision artificielle ou un marquage manuel par un humain.

7. Procédé selon l'une quelconque des revendications précédentes, comprenant en outre la fusion de l'au moins une parmi : une pluralité de réflexions statiques ou une pluralité de réflexions séquentielles dans le temps à partir d'une scène d'environnement et d'un ou plusieurs objets distracteurs avec une pluralité de réflexions simulées générées par une propriété de matériau de surface simulée de l'objet 3D cible et la génération d'un cube de délimitation à utiliser pour l'apprentissage du modèle AI.

8. Procédé selon l'une quelconque des revendications précédentes, dans lequel la séquence vidéo comprend une séquence vidéo à 360 degrés.

9. Procédé selon l'une quelconque des revendications précédentes, dans lequel le calcul des coordonnées du cadre de délimitation comprend :
- l'enfermement de l'objet 3D cible dans un cuboïde 3D invisible ; et
- le calcul des coordonnées d'un ou de plusieurs coins du parallélépipède 3D invisible faisant face à la caméra dans l'espace de surveillance.

10. Système (100) d'augmentation d'une séquence vidéo d'un espace de surveillance avec un objet tridimensionnel cible (3D) à partir d'une ou plusieurs perspectives pour l'apprentissage d'un modèle d'intelligence artificielle (IA), le système comprenant :
- une caméra cible (102) disposée dans l'espace de surveillance et couplée de manière communicative à un serveur (104), dans lequel la caméra cible est configurée pour capturer la séquence vidéo de l'espace de surveillance et transmettre la séquence vidéo capturée au serveur ; et
- le serveur (104) couplé de manière communicative à la caméra cible et comprenant :
- une mémoire (106) qui stocke un ensemble de modules ; et
- un processeur (108) qui exécute l'ensemble de modules pour augmenter une séquence vidéo d'un espace de surveillance avec un objet 3D cible à partir d'une ou plusieurs perspectives pour l'apprentissage d'un modèle d'IA, les modules comprenant :
- un module d'acquisition de séquences de données (110) pour acquérir la séquence de données vidéo à partir de la caméra cible dans l'espace de surveillance ;
- un module de plan de sol (112) pour :
- la détermination d'un plan de sol et d'une ou plusieurs coordonnées d'écran des coins du plan de sol dans la séquence vidéo ; et
- la normalisation des une ou plusieurs coordonnées d'écran en calculant une matrice d'homographie à partir du plan de sol et la détermination d'une
- position relative de chacun d'un ou de plusieurs objets dans le plan de sol ;
- un module de préparation de modèle (114) pour la préparation d'un modèle de l'objet 3D cible à utiliser pour l'apprentissage du modèle d'IA ;
- un module de positionnement d'objet 3D (116) pour la génération de manière itérative une position aléatoire et une rotation aléatoire pour l'objet 3D cible dans le plan de sol pour positionner l'objet 3D cible devant ou derrière un objet distracteur parmi le ou les objets dans le plan de sol ;
- un module de rendu (118) pour le rendu du modèle de l'objet 3D cible sur le plan de sol et composer l'objet 3D rendu et le plan de sol avec la séquence vidéo acquise pour générer des données composites, dans lequel, lorsque la position relative de l'objet 3D cible sur le plan de sol est derrière la position relative de l'objet distracteur, un masque de l'objet distracteur est utilisé pour obscurcir l'objet 3D cible ; et
- un module de données d'apprentissage (120) pour calculer des coordonnées d'un cadre de délimitation qui cadre la position relative de l'objet 3D cible dans l'image composite et sauvegarder l'image composite avec les coordonnées du cadre de délimitation à utiliser ultérieurement pour l'apprentissage du modèle d'IA.

11. Système selon la revendication 10, comprenant en outre un module de détermination de bord (122) configuré pour la détermination d'un ou plusieurs bords du plan de sol et le calcul d'une rotation 3D, d'une translation d'échelle par rapport à une position de caméra, et une caractéristique de lentille en utilisant un rapport d'aspect du plan de sol, avant la normalisation des une ou plusieurs coordonnées d'écran.

12. Système selon la revendication 10 ou 11, dans lequel le module de positionnement d'objet en 3D (116) est en outre configuré pour masquer un ou plusieurs objets se trouvant sur le plan de sol en trouvant un cadre de délimitation autour de chacun des un ou plusieurs objets, avant de déterminer la position relative de chaque objet dans le plan de sol.

13. Système selon l'une quelconque des revendications 10 à 12, dans lequel le module de positionnement d'objet 3D (116) est en outre configuré pour :
- multiplier la matrice d'homographie à une position centrale d'un bord inférieur du cadre de délimitation d'un objet parmi le ou les objets ; et
- générer une coordonnée bidimensionnelle (2D) représentant la position relative de l'objet sur le plan de sol normalisé.

14. Système selon l'une quelconque des revendications 10 à 13, dans lequel le module de données d'apprentissage (120) est en outre configuré pour :
- enfermer l'objet 3D cible dans un cuboïde 3D invisible ; et
- calculer les coordonnées d'un ou de plusieurs coins du cuboïde 3D invisible faisant face à la caméra dans l'espace de surveillance.
